# FASCICULE DE BREVET EUROPEEN

(11) **EP 0 651 137 B1**
(45) Date de publication et mention de la délivrance du brevet: **29.12.1997**
(21) Numéro de dépôt: 94402461.1
(22) Date de dépôt: 02.11.1994
(51) Int. Cl.: F01D 5/08

(54) **Turbomachine pourvue d'un moyen de réchauffage des disques de turbines aux montées en regime**
Turbomaschine mit System zur Heizung der Rotorscheiben in der Beschleunigungsphase
Turbomachine with heating of the rotor discs during engine acceleration

(30) Priorité: 03.11.1993 FR 9313044
(43) Date de publication de la demande: 03.05.1995
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Bertrand, Jean-Louis, F-77000 Livry/Seine (FR); Charier, Gilles Alain, F-77130 La Grande Paroisse (FR); Guyonnet, Xavier Jean-Michel, F-77310 Saint Fargeau, Ponthierry (FR); Picard, Jean-Louis, F-77000 Vaux Le Penil (FR)

(56) Documents cités:
- EP-A- 0 468 782
- GB-A- 2 135 394

## Description

L'invention se rapporte à une turbomachine comprenant des moyens de chauffage des disques de turbines aux montées en régime, quand ils sont soumis à des échauffements importants.

On connaît déjà de nombreux brevets dans lesquels certains éléments de turbomachine sont réchauffés, ou le plus souvent refroidis, en prélevant de l'air ou des gaz d'autres parties de la machine par un circuit de dérivation. Le but est généralement de provoquer des dilatations ou des contractions thermiques sur ces éléments afin de réduire les jeux entre les extrémités libres d'aubes de turbines ou de compresseurs et les parois devant ces extrémités libres et de limiter les fuites et les pertes de rendement.

La situation aux montées en régime de la machine, par exemple au décollage d'un avion si la machine est un turboréacteur, pose cependant des problèmes spécifiques car l'échauffement plus important qui est subitement produit par suite de l'augmentation du débit de gaz chaud concerne d'abord les aubes de turbines et les parties périphériques des disques de turbine, adjacentes à ces aubes. Il se forme en conséquence un gradient thermique sur les disques de turbine, dont les portions centrales ne s'échauffent que plus lentement, et les contraintes d'origine thermique qui apparaissent obligent à concevoir des disques de turbine beaucoup plus massifs qu'il ne serait nécessaire autrement.

L'objet de l'invention est donc de s'attaquer au gradient thermique produit aux montées en régime en réchauffant pendant ces périodes le centre d'un disque de turbine de la machine, qui sera souvent nais pas obligatoirement une turbine à haute pression, par un système de réchauffage qui soit coupé automatiquement dès qu'un régime de croisière est atteint et que la température devient plus uniforme dans la machine.

Un tel résultat peut être obtenu par exemple, selon EP-A-468.781, où un rotor de turbine comporte plusieurs disques portés par un arbre à l'intérieur duquel sont disposés deux cylindres formant vérins dont les parties d'extrémité se recouvrent et comportent des perçages.

En approchant des conditions stabilisées de fonctionnement les dilatations thermiques axiales du rotor déplaçent les cylindres et écartent les perçages en correspondance les uns des autres. On connaît ainsi une turbomachine comprenant un rotor, un stator, une chambre de combustion en amont d'une turbine appartenant au rotor et constituée en partie par un disque, et comprenant une voie de communication et de soufflage de gaz chaud d'une zone de soutirage de la turbomachine vers une zone centrale du disque, la voie de communication étant composée d'un conduit débouchant dans la zone de soutirage et solidaire du stator, et d'une chambre solidaire du rotor, les conduit et chambre étant joints par un assemblage annulaire comprenant des parois concentriques de fermeture, les parois étant cependant perforées par des orifices. Selon l'invention, une des parois comprend des crêtes circulaires et parallèles établies sur ladite paroi, dressées vers l'autre paroi qu'elles touchent sensiblement et délimitant des sillons dont certains sont dépourvus d'orifices, les orifices de l'autre des parois ou plaque étant situés de telle façon qu'ils débouchent en onction des dilatations thermiques différentielles dans la turbomachine à des régimes de fonctionnement différents, soit devant les sillons dépourvus d'orifices pour certains des régimes, soit devant les autres sillons pour d'autres des régimes.

La zone de soutirage peut être une portion de la chambre de combustion ou une porticn voisine des compresseurs de la turbomachine.

L'invention va maintenant être décrite plus en détail à l'aide des figures suivantes annexées à titre illustratif et non limitatif :
- la figure 1 illustre une vue générale de turbomachine sur laquelle une réalisation de l'invention est greffée,
- les figures 2A et 2B représentent l'élément essentiel de l'invention,
- et les figures 3 à 9 représentent sept autres réalisations de l'invention, la figure 6 étant complétée par un agrandissement 6A d'un de ses détails.

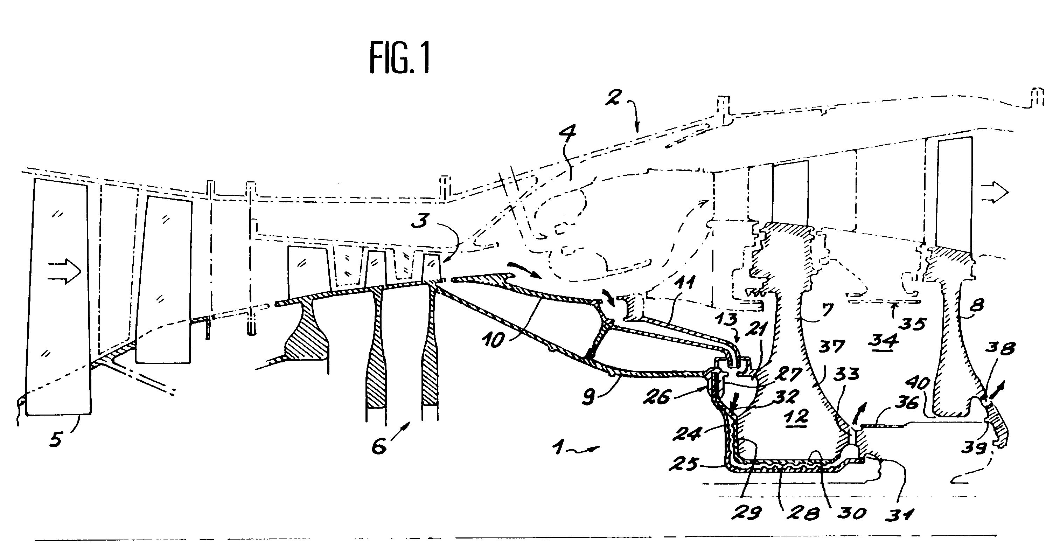

La turbomachine de la figure 1, représentée partiellement, est composée d'un rotor 1 entouré par un stator 2 et entre lesquels s'étend une veine annulaire 3 d'écoulement des gaz occupée par des étages d'aubes fixes et mobiles et par une chambre de combustion 4. On trouve successivement un compresseur à basse pression 5, un compresseur à haute pression 6, la chambre de combustion 4, une turbine à haute pression 7 et une turbine à basse pression 8 à travers la veine annulaire 3. Les compresseurs 5 et 6 ainsi que les turbines 7 et 8 appartiennent au rotor 1, qui comprend donc en particulier une paroi 9 de révolution qui relie le compresseur à haute pression 6 à la turbine à basse pression 7 et qu'entoure une paroi 10 interne de la chambre de combustion 4. Dans cette première réalisation de l'invention et dans les trois suivantes, des conduits 11 sont établis entre les parois 9 et 10 et s'étendent du fond de diverses portions de la chambre de combustion 4 à une portion annulaire de la paroi 9 qui touche au disque de la turbine à haute pression 7 et plus précisément à une partie centrale - proche de l'axe de la turbomachine - de ce disque. Cette partie centrale est désignée par 12 sur la figure 1 et évoque un bulbe car elle est beaucoup plus épaisse que le reste du disque, ce qui explique que de tels disques de turbine sont parfois appelés en poireau.

Un seul des conduits 11 apparaît sur la figure, mais les autres sont semblables et répartis autour de la paroi 9.

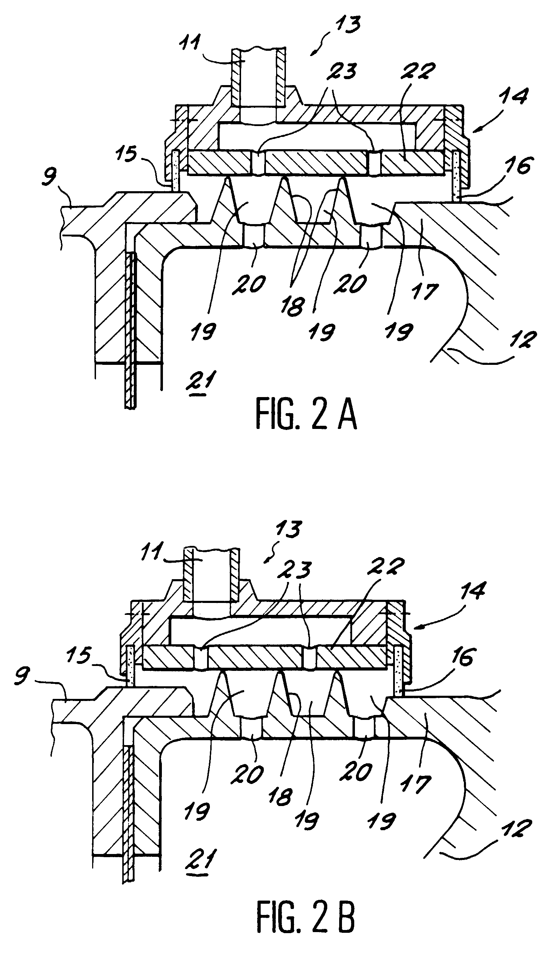

Les conduits 11 sont fixés rigidement à la paroi 10 et unis à la paroi 9 par un joint 13 qui est détaillé aux figures 2A et 2B. On y voit que les conduits 11 sont munis à cet endroit d'une embouchure 14 annulaire et commune munie de deux joints d'étanchéité qui peuvent être des joints à brosse 15 et 16 parallèles et circulaires qui frottent sur la paroi 9 ou, plus précisément dans le cas présent, sur un prolongement 17 de cette paroi 9 formée d'une pièce avec le disque de la turbine 7. Tous les conduits 11 convergent dans l'embouchure 14 qui constitue donc une chambre de rassemblement du gaz soutiré.

Des léchettes 18 sont établies sur le prolongement 17 de la paroi 9. Il s'agit de crêtes circulaires et parallèles effilées à leur extrémité libre. Elles délimitent des sillons 19 dont les fonds sont alternativement pleins et munis d'un orifice 20 qui traverse le prolongement 17 et débouche dans une chambre 21 dont une face est délimitée par le bulbe 12. L'embouchure 14 est recouverte d'une plaque 22 située devant les bords des léchettes 18 et qui est recouverte de matériau dit abradable sur la face orientée vers les léchettes 18, ou composée uniquement de ce matériau dont la propriété essentielle est d'être érodé facilement par le frottement des léchettes 18 de manière à ne laisser subsister qu'un jeu minimal en fonction des conditions d'ajustement réel des pièces et des dilatations d'origine thermique. La plaque 22 est perforée d'orifices 23 dont le pas d'espacement en direction longitudinale est semblable à celui des orifices 20, de sorte qu'ils viennent sensiblement en prolongement d'eux dans la situation de la figure 2A mais sont décalés et à mi-distance d'eux dans la situation de la figure 2B, qui traduit par rapport à la figure 2A un déplacement axial relatif des conduits 11 et de l'embouchure 13 par rapport au prolongement 17 de la paroi 9, à la turbine 7 et au rotor 1. La conséquence est que, si les gaz originaires de la chambre de combustion 4 s'écoulent librement dans la chambre 21 après avoir franchi les conduits 11, les orifices 23, les sillons 19 et les orifices 20 dans la situation de la figure 2A, la communication est presque interrompue dans la situation de la figure 2B car les orifices 23 de la plaque 22 débouchent dans les sillons 19 dépourvus d'orifices 20. La situation de la figure 2A est obtenue aux montées en régime de la turbomachine, quand l'échauffement des structures est beaucoup plus sensible dans certaines portions du stator 2 et en particulier près de la chambre de combustion 4 où la combustion est renforcée : les conduits 11 subissent un déplacement longitudinal vers l'aval par rapport au rotor 1 et les gaz chauds de la chambre de combustion 4 se répandent librement dans la chambre 21 pour réchauffer le bulbe 12 en soufflant sur lui et amoindrir ainsi le gradient thermique dans le disque de la turbine à haute pression 7.

Quand le régime est stabilisé, le différentiel thermique se réduit, le rotor 1 rattrape son retard à l'échauffement et se dilate à son tour vers l'aval : les joints 15 et 16 glissent sur la paroi 9 ou son prolongement 17, les léchettes 18 passent devant la plaque 22 et les orifices 23, et le chauffage du bulbe 12 cesse au moment ou il aurait pu introduire un nouveau gradient thermique après avoir corrigé le précédent.

On revient à la figure 1 pour expliquer concrètement comment le réchauffage du bulbe 12 est réalisé. Une paire de plaques 24 et 25 est pincée à une extrémité entre des nervures radiales et parallèles 26 et 27 de la paroi 9 et du prolongement 17. Les plaques 24 et 25 ont ensuite des formes différentes s'écartant et délimitent un jeu 28 à proximité du bulbe 12. Plus précisément, la plaque 24 touche le bulbe 12 sur sa face latérale amont 29 et sur sa face d'alésage 30, et la plaque 25 s'étend à peu de distance, est entourée par la plaque 24 et se raccorde par son extrémité opposée à celle qui est pincée à une collerette 31 à l'extrémité aval de l'alésage du bulbe 12. De plus, les plaques 24 et 25 ont des surfaces en relief, crénelées et formées de saillies imbriquées, de sorte que le jeu 28 forme des zigzags.

Des orifices 32 traversant la plaque 24 à un endroit où elle s'étend devant la chambre 21 avant de rejoindre le bulbe 12, ainsi que d'autres orifices 33 ménagés à travers une partie aval et amincie du bulbe 12, à un endroit qui n'est plus recouvert par la plaque 24 et qui est proche de la collerette 31, permettent au gaz de réchauffage précédemment entré dans la chambre 21 de contourner le bulbe 12 en parcourant le jeu 28, ce qui le réchauffe par les faces 29 et 30. Quand le gaz a franchi les orifices 33 de sortie du jeu 28, il se répand dans une chambre 34 située entre les disques des turbines à haute et basse pression 7 et 8 et délimitée en outre à l'extérieur par un anneau 35 de confinement solidaire du stator 2 et à l'intérieur par une virole 36 appartenant au rotor 1. Il contribue alors à réchauffer la face aval 37 du bulbe 12 et le disque de la turbine à basse pression 8, qu'il contourne de la même façon car la virole 36 forme un jeu avec l'alésage 40 du disque de la turbine à basse pression 8. Le gaz s'y engouffre avant de passer dans d'autres parties de la machine situées plus en aval par des orifices 38 traversant le disque de la turbine à basse pression 8. La virole 36 se raccorde, sensiblement comme la plaque 25, à une collerette 39 du disque de la turbine à basse pression 8 adjacente aux orifices de sortie 38.

Cette réalisation fournit un bon échange de chaleur entre le gaz et le bulbe 12. Si on est moins exigeant, il est possible de supprimer la plaque 24 et de remplacer la plaque 25 par une plaque lisse pour obtenir une circulation plus rapide du gaz.

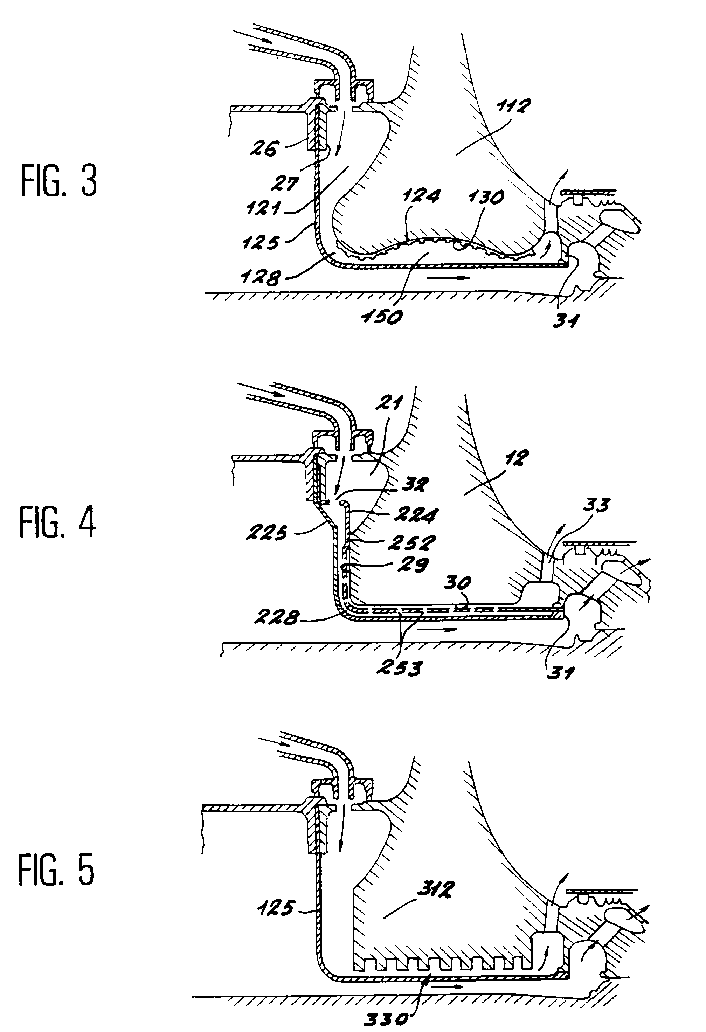

Dans la réalisation de la figure 3, les parties analogues à celles de la réalisation précédente mais quelque peu modifiées portent les mêmes références augmentées de 100, les parties semblables gardent les mêmes références et les parties complètement nouvelles portent d'autres références précédées de 100. Ce procédé sera aussi employé pour décrire les réalisations suivantes. Le bulbe 112 a une forme bilobée, la plaque 124, pourvue comme précédemment de saillies et de créneaux, est fixée uniquement à la face d'alésage 130 du bulbe 112 et ne s'étend pas au-delà, et la plaque 125 est lisse, et seule pincée entre les nervures 26 et 27. La chambre 121 s'ouvre directement dans le jeu 128, qui présente un élargissement 150 sensible entre les lobes du bulbe 112 car la plaque 125 est droite jusqu'à la collerette 31. Cette réalisation constitue un compromis entre celle de la figure 1, où l'échange de chaleur est très bon, et celle qu'on a évoquée au paragraphe précédent et qui est particulièrement simple grâce à la plaque unique et lisse. Les avantages et les inconvénients de ces deux réalisations précédentes sont donc mitigés ici.

On retrouve le bulbe 12 de la première réalisation sur la troisième, celle de la figure 4, mais les plaques 224 et 225 sont maintenant toutes deux lisses. La plaque 225 est d'ailleurs presque semblable à celle de la deuxième réalisation, mais la plaque 224 s'étend entre les nervures 26 et 27 et la collerette 31 et ne touche plus le bulbe 12 que sur une brève étendue 252, voisine de la chambre 21, au-delà de laquelle elle en est séparée et s'étend au milieu du jeu 228, qu'elle divise en deux. Elle est à cet endroit, devant les faces 29 et 30, foraminée, de sorte que le gaz de réchauffage circulant originellement entre les plaques 224 et 225 après avoir franchi les orifices 32 traverse progressivement les perçages 253 de la plaque 224 et est projeté sur le bulbe 12 perpendiculairement à ses faces 29 et 30 avant de reprendre l'écoulement vers les orifices de sortie 33. On conçoit qu'un excellent échange de chaleur est obtenu dans cette réalisation.

Dans la réalisation de la figure 5, on ne trouve qu'une plaque 125 lisse et semblable à celle de la deuxième réalisation, et le bulbe 312 est formé avec une face d'alésage 330 crénelée dont le but est encore de produire des turbulences dans l'écoulement de gaz pour accroître l'échange de chaleur. Les saillies et les créneaux sont comme précédemment circulaires et alternent en sens longitudinal.

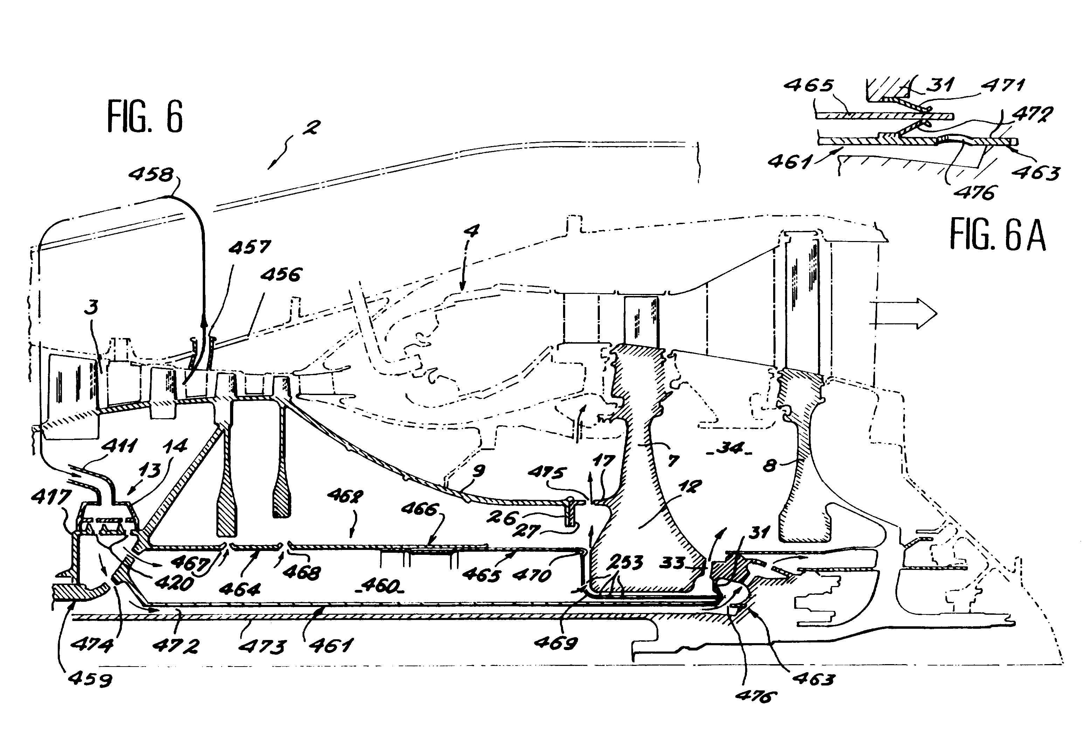

La réalisation de la figure 6, de même que les suivantes, est sensiblement différente, bien que des compromis avec celles qui précèdent puissent être conçus. Il est en effet possible de ne pas prélever le gaz de réchauffage de la chambre de combustion 4 mais de portions de la turbomachine situées plus en amont et en particulier près d'un des compresseurs 5 et 6. Dans ce cas, la paroi du stator 2 qui délimite la veine annulaire 3, et qui porte la référence 456, peut être pourvue de perçages 457 à travers lesquels s'écoule le gaz soutiré, qui atteint des conduits 411, analogues aux précédents 11 mais situés beaucoup plus en amont de la turbomachine, en amont même des compresseurs 5 et 6, par un conduit de transit 458. Comme précédemment, les conduits 411 sont reliés rigidement au stator 2, par un moyen non représenté, et un joint 13 semblable à celui de la figure 2 relie les conduits 411 à une portion du rotor 1, plus précisément à une paroi portant la référence 459. Dans le cas présent, la paroi 459 est conique et l'embouchure 14 touche donc une surface circulaire 417 qui appartient à un renflement établi à cet effet sur la paroi 459. Les orifices 420 débouchent dans une chambre 460 dont la forme est profondément originale car il s'agit d'une chambre allongée et annulaire délimitée par deux capotages 461 et 462 concentriques. Le capotage interne 461 s'étend entre la paroi 459 et une gorge 463 située en aval du bulbe 12 de la turbine à haute pression 7, un peu en aval de la collerette 31. Le capotage externe 462 est composé d'une partie amont 464 et d'une partie aval 465 qui prolonge la précédente. Les parties 464 et 465 peuvent coulisser l'une sur l'autre par des portions en recouvrement 466 si on désire dégager le bulbe 12 pour monter ou démonter le disque. Un avantage inhérent à cette catégorie de réalisations est que le gradient thermique que les disques du compresseur à haute pression 6 peuvent subir est également amoindri si le gaz prélevé et déjà réchauffé est en partie soufflé vers les faces d'alésage des disques du compresseur 6 en passant par des perçages 467 et 468 établis en deux cercles au droit desdites faces d'alésage sur la partie amont 464 du capotage externe 462.

La partie aval 465 du capotage externe 462 s'étend devant le bulbe 12 et plus précisément devant sa face amont 29 et sa face d'alésage 30 par une portion foraminée 469 qui évoque la figure 4. Elle est en effet percée d'orifices 253 qui permettent de souffler l'air prélevé perpendiculairement aux faces 29 et 30 du bulbe 12. Une excroissance 470 de la partie aval 465, établie juste en amont de la zone foraminée 469, limite les fuites de gaz en amont du disque de la turbine à haute pression 7, mais une partie du gaz s'écoule cependant à cet endroit et contribue à réchauffer légèrement le reste du disque du côté amont en traversant éventuellement la paroi 9 ou son prolongement 17, ainsi que d'autres parois, par des évidements 475. L'essentiel de l'air passe toutefois dans les orifices 33 de sortie puis dans la chambre 34 comme dans les réalisations précédentes. L'extrémité aval de la partie aval 465 est munie de lèvres élastiques (figure 6A) : une lèvre externe 471 pressée contre la collerette 31 et une lèvre interne 472 pressée contre le capotage interne 461. On garantit ainsi l'absence de fuite de gaz de ce côté ainsi qu'un bon maintien du capotage externe 462.

Les conduits 411 ou certains d'entre eux peuvent aussi déboucher dans un intervalle 472 compris entre le capotage interne 461 et un tube de rotor 473 entouré par celui-là, en passant par des orifices 474 supplémentaires ménagés dans la paroi 459. Des perçages sont alors prévus sur le capotage interne 461 près de la zone 463. Ils portent la référence 476 et permettent au gaz prélevé ainsi de s'écouler vers d'autres parties de la turbomachine.

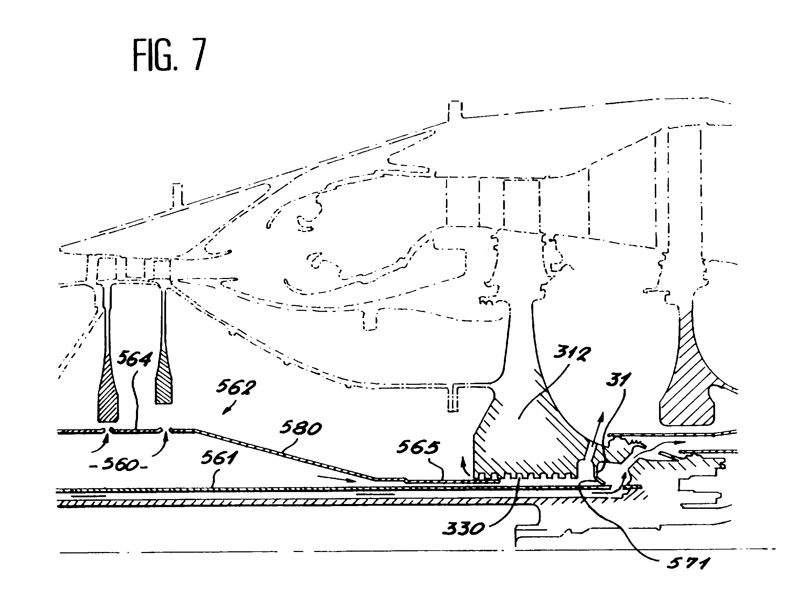

Sur la figure 7, les capotages portent les références 561 et 562 et diffèrent des précédents tout d'abord en ce que le capotage interne 561 est pressé contre la collerette 31 par une lèvre 571, et que le capotage externe 562, formé encore d'une partie amont 564 et d'une partie aval 565, présente une section conique 580 et s'arrête devant la face d'alésage 330 crénelée du bulbe 312 de la figure 5. La chambre 560 est donc amincie vers l'aval.

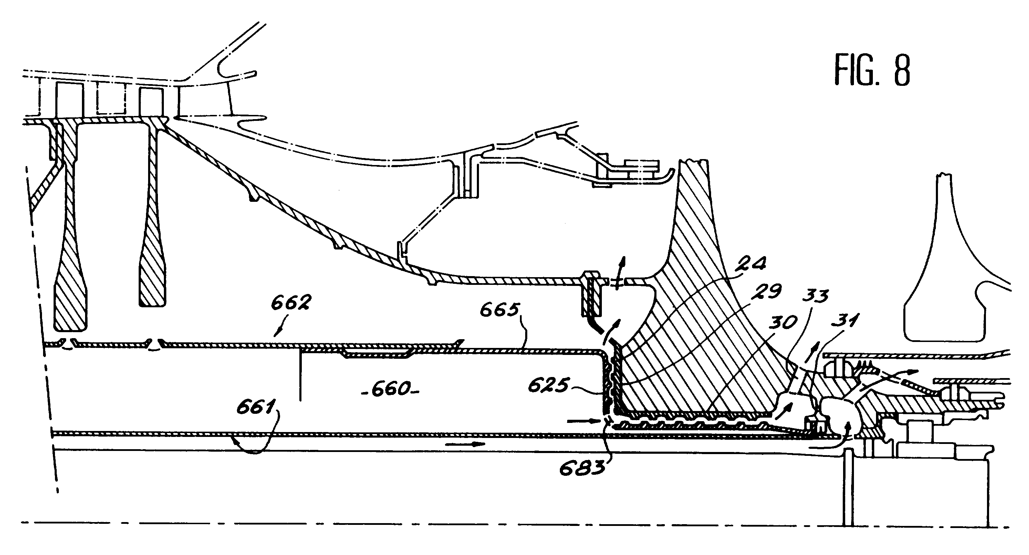

La figure 8 ressemble à la figure 1 en ce que la partie aval 665 du capotage externe 662 est pourvue d'une portion d'extrémité 625 qui évoque la plaque 25 de cette réalisation ; la plaque 24 est maintenue telle quelle, et le gaz quitte la chambre 660 intermédiaire entre les capotages 661 et 662 en traversant des perçages 683 établis à travers la partie aval 665 devant la jonction des faces 29 et 30. Il remonte le long du disque soit du côté amont par la face avant 29, soit du côté aval par la face d'alésage 30 et les orifices 33 de sortie. Dans cette réalisation, les capotages 661 et 662 s'appuient tous deux sur la collerette 31.

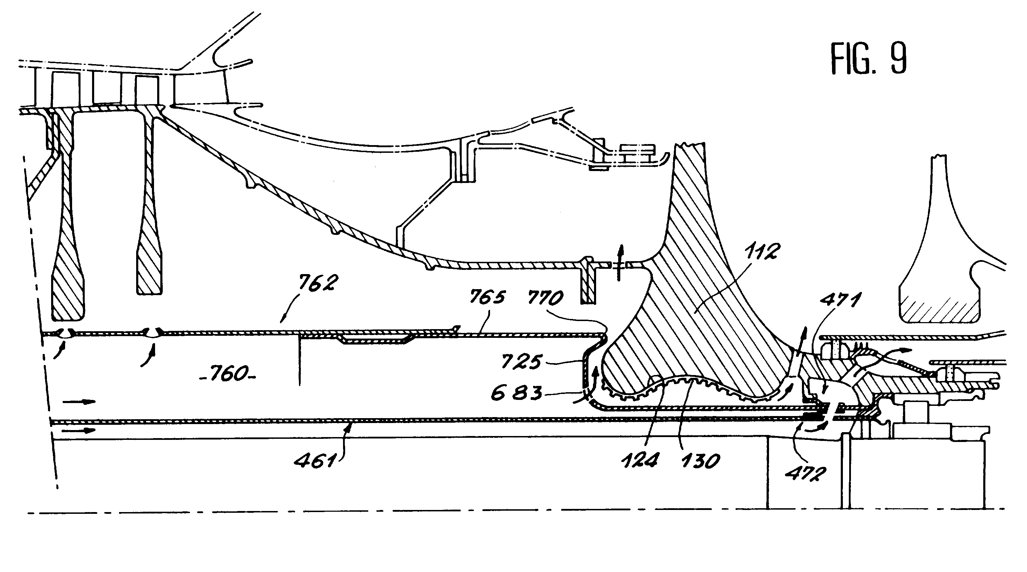

Enfin la réalisation de la figure 9 ressemble beaucoup à celle de la figure 3, car on retrouve en particulier le bulbe 112 bilobé et une plaque 124 recourbée qui épouse la face d'alésage 130 creuse ; la partie aval 765 du capotage 762 est profilé sensiblement comme la plaque 125 à l'endroit 725 situé devant le bulbe bilobé 112, et le capotage externe 762 est appuyé par des lèvres 471 et 472 opposées à la collerette 31 et au capotage interne 461. Des perçages 683 permettent au gaz de quitter la chambre 760 pour souffler sur le bulbe bilobé 112 devant l'entrée de la face d'alésage 130. Ici encore une excroissance 770 est ménagée devant l'endroit 725 pour limiter les fuites vers la face amont du disque de la turbine à haute pression 7, en étranglant le passage que le gaz doit emprunter.

Les réalisations des figures 6 à 9 peuvent en outre être modifiées en adoptant certaines dispositions connues telles que l'adjonction d'une vanne de réglage de débit sur le conduit de transit 458 de la figure 6 et en remplaçant le joint 13 par un joint classique à brosse.

## Revendications

1. Turbomachine comprenant un rotor (1), un stator (2), une chambre de combustion (4) en amont d'une turbine (7) appartenant au rotor (1) et constituée en partie par un disque et comprenant une voie de communication et de soufflage de gaz chaud d'une zone de soutirage (4, 457) de la turbomachine vers une zone centrale du disque, la voie de communication étant composée d'un conduit (11, 411, 458) débouchant dans la zone de soutirage et solidaire du stator (2), et d'une chambre (21, 121, 28, 128, 228, 33, 460, 560, 660, 760) solidaire du rotor 1), les conduit et chambre étant joints par un assemblage annulaire comprenant des parois concentriques de fermeture (17, 22), les parois étant cependant perforées par des orifices (20, 23), caractérisée en ce que une (17) des parois comprend des crêtes (18) circulaires et parallèles établies sur ladite paroi, dressées vers l'autre paroi (22) qu'elles touchent sensiblement et délimitant des sillons (19) dont certains sont dépourvus d'orifices, les orifices (23) de l'autre des parois ou plaque (22) étant situées de telle façon qu'ils débouchent en fonction des dilatations thermiques différentielles dans la turbomachine à des régimes de fonctionnement différents, soit devant les sillons (19) dépourvus d'orifices pour certains des régimes, soit devant les sillons pourvus d'orifices (20) pour d'autres des régimes.

2. Turbomachine suivant la revendication 1, caractérisée en ce que l'autre paroi (21) est recouverte de matériau érodable devant les crêtes (18).

3. Turbomachine suivant l'une quelconque des revendications 1 ou 2, caractérisée en ce que la chambre de la voie de communication qui appartient au rotor est munie devant la zone centrale du disque de turbine (7) de moyens (24, 25, 124, 330) pour rendre les gaz turbulents.

4. Turbomachine suivant la revendication 3, caractérisée en ce que les moyens consistent en des reliefs (24, 124, 330) situés sur ladite zone centrale.

5. Turbomachine suivant l'une quelconque des revendications 1 ou 2, caractérisée en ce que la chambre de la voie de communication qui appartient au rotor est munie devant ladite zone centrale de moyens (224) pour dévier les gaz vers la zone de soufflage.

6. Turbomachine suivant la revendication 5, caractérisée en ce que les moyens consistent en une plaque foraminée proche de ladite zone centrale et la recouvrant.

7. Turbomachine suivant l'une quelconque des revendications 1 à 6, caractérisée en ce que la zone de soutirage est une portion de la chambre de communication (4).

8. Turbomachine suivant l'une quelconque des revendications 1 à 6, caractérisée en ce que la zone de soutirage est une portion voisine d'un compresseur (5 ou 6) en amont de la chambre de combustion.

9. Turbomachine suivant la revendication 8, caractérisée en ce que la chambre de la voie de communication qui est solidaire du rotor comprend des orifices (467, 468) de soufflage de gaz vers des zones centrales de disques de compresseur (6) de la turbomachine.

10. Turbomachine suivant l'une quelconque des revendications 8 ou 9, caractérisée en ce que la chambre de la voie de communication qui est solidaire du rotor comprend deux capotages concentriques (461, 462, 561, 562, 661, 662, 762) entre lesquels la voie de communication est annulaire.

11. Turbomachine suivant la revendication 10, caractérisée en ce que celui des capotages (562) qui entoure l'autre (561) s'étend jusqu'à la zone centrale du disque de turbine sans le recouvrir.

12. Turbomachine suivant la revendication 10, caractérisée en ce que celui des capotages (462, 662, 762) qui entoure l'autre (461, 661) s'étend au-delà de la zone centrale du disque de turbine et est percé (683) ou foraminé (253) devant la zone centrale.

13. Turbomachine suivant la revendication 12, caractérisée en ce que celui des capotages qui entoure l'autre est composé de deux parties (464, 465, 665, 765) se recouvrant partiellement (466) et pouvant coulisser l'une dans l'autre.

## Patentansprüche

1. Turbomaschine mit einem Rotor (1), einem Stator (2), einer Verbrennungskammer (4) stromaufwärts einer Turbine (7), die zum Rotor (1) gehört und teilweise aus einer Scheibe besteht, und einem Verbindungs- und Strömungsweg für heißes Gas von einem Entnahmebereich (4, 457) der Turbomaschine in Richtung eines Mittelbereiches der Platte, wobei der Verbindungsweg aus einem Kanal (11, 411, 458), der in den Entnahmebereich mündet und formschlüssig mit dem Stator (2) verbunden ist, und aus einer Kammer (21, 121, 28, 128, 228, 33, 460, 560, 660, 760) besteht, die mit dem Rotor (1) formschlüssig verbunden ist, wobei der Kanal und die Kammer durch eine ringförmige Anordnung verbunden sind, die konzentrische Verschlußwände (17, 22) aufweist, wobei die Wände dabei mit Öffnungen (20, 23) durchlöchert sind, **dadurch gekennzeichnet,** daß eine (17) der Wände ringförmige und parallel an der Wand angebrachte Kämme (18) aufweist, die zu der anderen Wand (22) gerichtet sind, die sie merklich berühren, und die Rinnen (19) begrenzen, von denen bestimmte keine Öffnungen aufweisen, wobei die Öffnungen (23) der anderen der Wände oder Platte (22) derart, daß sie abhängig von thermischen differentiellen Ausdehnungen in der Turbomaschine zu unterschiedlichen Betriebszuständen führen, entweder in bestimmten Zuständen an den Rinnen (19) ohne Öffnungen oder in anderen Zuständen an den Rinnen mit Öffnungen (20) angeordnet sind.

2. Turbomaschine gemäß Anspruch 1, **dadurch gekennzeichnet,** daß die andere Wand (21) an den Kämmen (18) mit einem erodierenden Material bedeckt ist.

3. Turbomaschine gemäß einem der Ansprüche 1 oder 2, **dadurch gekennzeichnet,** daß die Kammer des Verbindungsweges, die zum Rotor gehört, an dem Mittelbereich der Scheibe der Turbine (7) mit Einrichtungen (24, 25, 124, 330) versehen ist, um das Gas turbulent zu machen.

4. Turbomaschine gemäß Anspruch 3, **dadurch gekennzeichnet,** daß die Einrichtungen aus Erhöhungen (24, 124, 330) bestehen, die auf dem Mittelbereich angeordnet sind.

5. Turbomaschine gemäß einem der Ansprüche 1 oder 2, **dadurch gekennzeichnet,** daß die Kammer des Verbindungsweges, die zum Rotor gehört, an dem Mittelbereich mit Einrichtungen versehen ist, um das Gas zum Strömungsbereich zu lenken.

6. Turbomaschine gemäß Anspruch 5, **dadurch gekennzeichnet,** daß die Einrichtungen aus einer Platte bestehen, die in der Nähe des Mittelbereiches durchbohrt ist und ihn überdeckt.

7. Turbomaschine gemäß einem der Ansprüche 1 bis 6, **dadurch gekennzeichnet,** daß der Entnahmebereich ein Teil der Verbrennungskammer (4) ist.

8. Turbomaschine gemäß einem der Ansprüche 1 bis 6, **dadurch gekennzeichnet,** daß der Entnahmebereich ein Abschnitt neben einer Verdichtungseinrichtung (5 oder 6) stromaufwärts der Verbrennungskammer ist.

9. Turbomaschine gemäß Anspruch 8, **dadurch gekennzeichnet,** daß die Kammer des Verbindungsweges, die formschlüssig mit dem Rotor verbunden ist, Öffnungen (467, 468) für den Gasstrom in Richtung der Mittelbereiche der Scheiben der Verdichtungseinrichtung (6) der Turbomaschine aufweist.

10. Turbomaschine gemäß einem der Ansprüche 8 oder 9, **dadurch gekennzeichnet,** daß die Kammer des Verbindungsweges, die formschlüssig mit dem Rotor verbunden ist, zwei konzentrische Verkleidungen (461, 462, 561, 562, 661, 662, 762) aufweist, zwischen denen der Verbindungsweg ringförmig ist.

11. Turbomaschine gemäß Anspruch 10, **dadurch gekennzeichnet,** daß diejenige der Verkleidungen (562), die die andere (561) umgibt, sich bis in den Mittelbereich der Scheibe der Turbine erstreckt, ohne sie zu bedecken.

12. Turbomaschine gemäß Anspruch 10, **dadurch gekennzeichnet,** daß diejenige der Verkleidungen (462, 662, 762), die die andere (461, 661) umgibt, sich über den Mittelbereich der Scheibe der Turbine hinaus erstreckt und an dem Mittelbereich durchlocht (683) oder durchbohrt (253) ist.

13. Turbomaschine gemäß Anspruch 12, **dadurch gekennzeichnet,** daß diejenige der Verkleidungen, die die andere umgibt, aus zwei Teilen (464, 465, 665, 765) besteht, die sich teilweise überdecken (466) und ineinander gleiten können.

## Claims

1. Turbomachine comprising a rotor (1), a stator (2), a combustion chamber (4) upstream of a turbine (7) belonging to the rotor (1) and consisting in part of a disc and comprising a passage for communication and blowing hot gas from a tapping-off region (4, 457) of the turbomachine towards a central region of the disc, the communication passage being composed of a duct (11, 411, 458) that opens into the tapping-off region and is an integral part of the stator (2), and of a chamber (21, 121, 28, 128, 228, 33, 460, 560, 660, 760) that is an integral part of the rotor (1), the duct and chamber being joined by an annular assembly comprising concentric closure walls (17, 22), the walls being, however, perforated with orifices (20, 23), the turbomachine being characterized in that one (17) of the walls has circular and parallel peaks (18) formed on the said wall and standing out towards the other wall (22) that they practically touch and delimiting grooves (19), some of which have no orifices, the orifices (23) of the other of the walls or plate (22) being situated in such a way that depending on the differential thermal expansions in the turbomachine at various operating speeds, they open either into the grooves (19) that have no orifices, for some of the speeds, or into the grooves that have orifices (20) for other speeds.

2. Turbomachine according to Claim 1, characterized in that the other wall (21) is covered with erodable material opposite the peaks (18).

3. Turbomachine according to either one of Claims 1 and 2, characterized in that the chamber of the communication passage that belongs to the rotor is equipped, facing the central region of the turbine disc (7), with means (24, 25, 124, 330) for making the gas flow turbulent.

4. Turbomachine according to Claim 3, characterized in that the means consist of reliefs (24, 124, 330) situated on the said central region.

5. Turbomachine according to either one of Claims 1 and 2, characterized in that the chamber of the communication passage that belongs to the rotor is equipped, facing the said central region, with means (224) for deflecting the gases towards the blowing region.

6. Turbomachine according to Claim 5, characterized in that the means consist of a perforated plate close to the said central region and covering it.

7. Turbomachine according to any one of Claims 1 to 6, characterized in that the tapping-off region is a portion of the combustion chamber (4).

8. Turbomachine according to any one of Claims 1 to 6, characterized in that the tapping-off region is a nearby portion of a compressor (5 or 6) upstream of the combustion chamber.

9. Turbomachine according to Claim 8, characterized in that the chamber of the communication passage that is an integral part of the rotor comprises orifices (467, 468) for blowing gas towards central regions of discs (6) of a compressor of the turbomachine.

10. Turbomachine according to either one of Claims 8 and 9, characterized in that the chamber of the communication passage that is an integral part of the rotor comprises two concentric cowlings (461, 462, 561, 562, 661, 662, 762) between which the communication passage is annular.

11. Turbomachine according to Claim 10, characterized in that the cowling (562) that surrounds the other cowling (561) extends as far as the central region of the turbine disc without covering it.

12. Turbomachine according to Claim 10, characterized in that the cowling (462, 662, 762) that surrounds the other cowling (461, 661) extends beyond the central region of the turbine disc and is pierced (683) or perforated (253) facing the central region.

13. Turbomachine according to Claim 12, characterized in that the cowling that surrounds the other cowling is composed of two parts (464, 465, 665, 765) that partially cover one another (466) and can slide one inside the other.
